# EUROPÄISCHE PATENTSCHRIFT

(11) **EP 2 432 356 B1**
(45) Veröffentlichungstag und Bekanntmachung des Hinweises auf die Patenterteilung: **05.03.2014**
(21) Anmeldenummer: 10717125.8
(22) Anmeldetag: 29.04.2010
(51) Int. Cl.: A47J 43/07

(54) **KUPPLUNGSVORRICHTUNG FÜR EIN KÜCHENGERÄT**
COUPLING DEVICE FOR A KITCHEN DEVICE
DISPOSITIF D'ACCOUPLEMENT POUR UN APPAREIL DE CUISINE

(30) Priorität: 19.05.2009 DE 102009003250
(43) Veröffentlichungstag der Anmeldung: 28.03.2012
(73) Patentinhaber: BSH Bosch und Siemens Hausgeräte GmbH, 81739 München (DE)
(72) Erfinder: RUDEZ, Darko, 3230 Sentjur Slowenien (SI); PESEC, Jurij, 3301 Petrovce Slowenien (SI)
(86) Internationale Anmeldenummer: PCT/EP2010/055772
(87) Internationale Veröffentlichungsnummer: WO 2010/133431

(56) Entgegenhaltungen:
- US-A- 4 669 672
- US-A- 4 700 903
- US-A- 4 817 878

## Beschreibung

### Hintergrund der Erfindung

Die vorliegende Erfindung betrifft eine Kupplungsvorrichtung für ein Küchengerät zum Ankuppeln an eine Antriebseinrichtung des Küchengeräts, um ein Werkzeug rotierend um eine Rotationsachse anzutreiben, wobei die Kupplungsvorrichtung eine umlaufende Außenfläche mit mindestens einem Aufnahmebereich zum Aufnehmen des Werkzeugs aufweist.

### Stand der Technik

Küchengeräte und insbesondere Küchenmaschinen werden mit Hilfe von Elektromotoren betrieben. Die Elektromotoren weisen eine Antriebswelle auf, welche mit Hilfe von geeigneten Kupplungsteilen die Rotationsbewegung auf ein Arbeitswerkzeug, wie ein Schneidemesser beispielsweise, übertragen kann. Die Kupplungen müssen dergestalt ausgebildet sein, dass eine drehfeste Verbindung zwischen Werkzeug und Antriebswelle realisiert ist. Das drehende Werkzeug kann dann ein Mischgut (z.B. ein Lebensmittel), welches innerhalb der Schüssel zugegeben werden kann, verarbeiten. Das Werkzeug sollte möglichst drehfest gelagert werden und zusätzlich sollte dieses nicht aus der Kupplungsvorrichtung herausspringen, falls beispielsweise zähes Mischgut verarbeitet wird, oder falls die Drehzahl der Antriebseinheit variiert wird.

Hierzu sind einige Maßnahmen bekannt, die beispielsweise in der DE 44 14 415 C1 offenbart sind. Hierin wird vorgeschlagen, dass die Antriebsnabe mit Noppen versehen wird, damit das Arbeitswerkzeug drehfest in seiner Position gehalten wird. So beschreibt ebenfalls das deutsche Gebrauchsmuster 295 01 484.9 ein Küchengerät, wobei die Kupplung mit dem Werkzeug mit Hilfe eines Verschlusses verbunden wird, der einige Schlitze aufweist, welche mit geeigneten Mitteln am Arbeitswerkzeug zusammenwirken. Weitere Küchengeräte mit geeigneten Kupplungsvorrichtungen für die Lebensmittelbearbeitungswerkzeuge sind auch in der US 4 700 903, der US 4 817 878 und der US 4 669 672 offenbart.

Das grundlegende problem solcher Kupplungsvorrichtungen gemäß dem Stand der Technik ist, dass diese nicht unabhängig von der Rotationsrichtung der Antriebswelle zuverlässig funktionieren. Im Betrieb können durch das Mischgut sogenannte Rückschläge auf das Werkzeug entstehen, welche dann wiederum das Werkzeug aus der Kupplung lösen können. Dies kann zu Verletzungen eines Benutzers führen. Auch die Reinigung solcher Kupplungen ist umständlich, da sich Lebensmittel innerhalb der Kupplung fest setzen kann. Diese verhärteten Lebensmitteln können dann ebenfalls bei der Montage des Werkzeugs auf die Kupplung Probleme bereiten, da keine Justierung in die dafür vorgesehen Endlage möglich ist.

### Der Erfindung zugrundeliegende Aufgabe

Der Erfindung liegt die Aufgabe zugrunde, eine Kupplungsvorrichtung für ein Küchengerät bereitzustellen, welche ein Werkzeug effektiv antreibt und das Herlauslösen des Werkzeugs aus der Kupplungsvorrichtung verhindert.

### Erfindungsgemäße Lösung

Die Lösung der gestellten Aufgabe gelingt durch eine Kupplungsvorrichtung mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Die erfindungsgemäße Kupplungsvorrichtung für ein Küchengerät zum Ankuppeln an eine Antriebseinrichtung des Küchengeräts, um ein Werkzeug rotierend um eine Rotationsachse anzutreiben, weist eine umlaufende Außenfläche auf. Die Außenfläche weist mindestens einen Aufnahmebereich zum Aufnehmen eines Werkzeugs, insbesondere eines Arbeitswerkzeugs, auf. Der Aufnahmebereich umfasst einen ersten Eingriffsbereich und einen zweiten Eingriffsbereich, so dass das Werkzeug unabhängig von der Rotationsrichtung im Wesentlichen spielfrei entlang der Rotationsachse aufnehmbar ist.

Die Aufnahmebereiche auf der umlaufenden Außenfläche der Kupplungsvorrichtung bewirken, dass ein Werkzeug immer in einer spielfreien Verbindung entlang der Rotationsachse gehalten wird. Durch die besondere Ausgestaltung der Aufnahmebereiche werden die Kräfte, welche durch das Drehmoment der Antriebswelle entstehen, so wirken, dass eine Kraftkomponente das Werkzeug immer spielfrei in der Kupplung festhält. Dieses Festhalten geschieht in beiden Rotationsrichtungen und auch im Falle eines Rückschlags auf das Werkzeug, welcher beispielsweise durch die Trägheit des Mischguts oder durch Drehzahländerungen des antreibenden Motors entstehen können. Somit kann das Werkzeug immer in einem konstanten Abstand zum Boden einer Rührschüssel oder eines Behälters in dem das Werkzeug rotiert und die Lebensmittel bearbeitet. Durch den Einsatz von zwei Aufnahmebereichen kann das Werkzeug in beiden Rotationsrichtungen spielfrei gelagert werden, so dass beispielsweise der erste Aufnahmebereich in der Vorwärtsrichtung, das heißt in der normalen Arbeitsbewegung des Motors, wirksam ist und der zweite Aufnahmebereich im Falle eines Rückschlags wirkt. Auch beispielsweise Vibrationen des Werkzeugs können mit Hilfe der erfindungsgemäßen Vorrichtung ausgeglichen werden, da immer eine Kraftkomponente derart auf das Werkzeug wirkt, dass es nicht aus der Lagerung in der Kupplungsvorrichtung heraus gleiten kann.

Der erste Eingriffsbereich weist eine Antriebskante auf und der zweite Eingriffsbereich weist eine Rückschlagskante auf. Durch die Ausgestaltung solcher Kanten kann der Kontaktbereich zwischen Werkzeug und Kupplungsvorrichtung verbessert werden. Somit wird das Werkzeug in der Kupplungsvorrichtung unabhängig von der Rotationsrichtung sicher und fest fixiert. Auch im Falle eines Rückschlags durch beispielsweise Anhalten des Elektromotors wird das Werkzeug spielfrei in der Kupplung fest gehalten.

Die Antriebskante und die Rückschlagskante verlaufen gemäß vorliegender Erfindung antiparallel. Dieser Verlauf der Kanten ist günstig für das Herstellungsverfahren und zusätzlich kann das Drehmoment der Kupplungsvorrichtung in beiden Rotationsrichtungen so auf das Werkzeug übertragen werden, dass kein Spiel entlang der Rotationsachse entstehen kann. Im Falle des Normalantriebes bildet sich eine Kraftkomponente, welche das Werkzeug in Richtung zur Antriebswelle fixiert. Analog bildet sich eine ähnliche Kraftkomponente im Falle eines Rückschlags auf das Werkzeug durch das Mischgut falls beispielsweise der Antriebsmotor angehalten wird.

### Bevorzugte Ausgestaltung der Erfindung

Zweckmäßigerweise ist die Antriebskante unter einem Winkel zur Richtung der Rotationsachse ausgebildet ist, wobei der Winkel zwischen 10° und 20°, insbesondere 20° zur Richtung der Rotationsachse geneigt ist. Somit kann eine effektive Abwärtskraft auf das Werkzeug eingestellt werden, welche bewirkt, dass das Werkzeug sicher in der Kupplungsvorrichtung fixiert ist. Auch im Herstellungsverfahren, nämlich Spritzgussverfahren ist die Ausbildung dieses Winkels besonders effektiv durchführbar.

Es ist bevorzugt, dass die Rückschlagskante im Wesentlichen parallel zu Richtung (8) ausgebildet ist. Diese Kante ist ebenfalls leicht herstellbar in der Produktion und die notwendige Kraftkomponente zur Fixierung des Werkzeugs in der Kupplung im Falle eines Rückschlags ist ebenfalls ausreichend.

Es ist bevorzugt, dass die Antriebskante und die Rückschlagskante jeweils eine entlang der Kante verlaufende abgeschrägte Fase aufweisen, welche derart eingerichtet ist das Werkzeug in der Kupplungsvorrichtung zu fixieren. Somit kann das Werkzeug in beiden Rotationsrichtungen besser fixiert werden, da im Kontaktbereich ein Presssitz entsteht, und somit die Übertragung des Drehmomentes verbessert wird. Durch diesen Presssitz kann auch störendes Klappern vermieden werden, welches durch eine lockere Verbindung zwischen Werkzeug und Kupplung entstehen kann.

In einer bevorzugten Ausführungsform weist der Aufnahmebereich ferner einen dritten Bereich auf, welcher zwischen dem ersten Eingriffsbereich und dem zweiten Eingriffsbereich ausgebildet ist, und eingerichtet ist das Werkzeug während eines Montagevorgangs des Werkzeugs auf die Kupplungsvorrichtung in eine Endlage zu justieren. Damit kann ein Benutzer des Küchengeräts leicht das gewünschte Werkzeug, zum Beispiel ein Schneidmesser bequem in seine Arbeitsposition bzw. Endlage anbringen. Durch den dritten Aufnahmebereich erfolgt eine automatische Ausrichtung des Werkzeugs in der Kupplungsvorrichtung.

Es ist bevorzugt, dass die Rotationsachse sich im Wesentlichen vertikal erstreckt. Somit kann die Kupplungsvorrichtung samt Werkzeug platzsparend in einem Behälter oder einer Schüssel des Küchengeräts angeordnet werden.

Gemäß einer bevorzugten Ausführungsform sind die Aufnahmebereiche symmetrisch auf der umlaufenden Außenfläche ausgebildet, und rippenartig aus der umlaufenden Außenfläche herausragen. Diese Konstruktion ist vorteilhaft herzustellen, und durch die Rippenform der Aufnahmebereich auf der Außenfläche kann das Drehmoment effektiv auf das Werkzeug übertragen werden.

Bevorzugt ist die Kupplungsvorrichtung in einem Spritzgussverfahren herstellbar, und besteht insbesondere aus Kunststoff.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 eine Kupplungsvorrichtung gemäß einer Ausführungsform der vorliegenden Erfindung;
Fig. 2 ein Küchengerät mit einer Küchenvorrichtung mit montiertem Werkzeug gemäß einer Ausführungsform der vorliegenden Erfindung;
Fig. 3 eine Kupplungsvorrichtung mit einem Werkzeug in einer perspektivischen Ansicht;
Fig. 4 eine weitere Ansicht der Kupplungsvorrichtung mit aufgenommenen Werkzeug;
Fig. 5a das Zusammenwirken zwischen Kupplungsvorrichtung und Werkzeug; und schließlich
Fig. 5b und 5c die Kräfte die erfindungsgemäß jeweils rotationsbedingt bewirkt werden.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare-Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

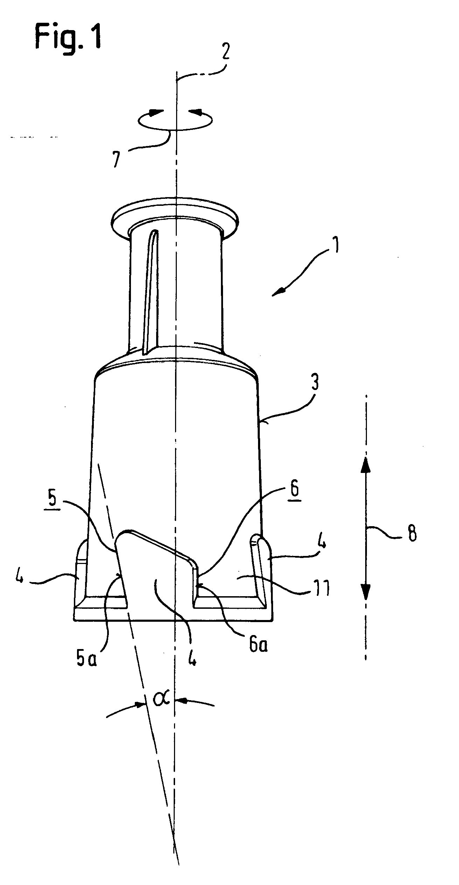

Fig. 1 zeigt eine Kupplungsvorrichtung gemäß einer möglichen Ausführungsform der vorliegenden Erfindung. Die Kupplungsvorrichtung 1 hat in ihrem unteren Bereich einen Hohlraum, welcher ausgebildet ist auf eine Antriebswelle eines Küchengeräts 13 aufgesteckt zu werden. Die Antriebswelle wird wiederum von einem Elektromotor des Küchengeräts 13 angetrieben. Die Kupplungsvorrichtung kann abnehmbar hergestellt werden, so dass diese nach dem Gebrauch wieder von der Antriebswelle entfernt werden kann. Das Werkzeug, beispielsweise ein Schneidemesser, wird einfach auf der Kupplungsvorrichtung 1 von oben montiert und wird mit Hilfe der erfindungsgemäßen Aufnahmebereiche 4 auf der Kupplung 1 fixiert. Das Werkzeug weist beispielsweise eine Öffnung, welche die Dimension des Außendurchmessers der Kupplungsvorrichtung 1 aufweist. Auch das Werkzeug 10 ist dergestalt, dass dieses wieder von der Kupplungsvorrichtung abgenommen werden kann. Folglich wird das Werkzeug 10 ebenfalls mit Hilfe des Elektromotors des Küchengeräts 13 in Rotation versetzt, und die Lebensmittel aus einem Behälter 9 können verarbeitet werden.

Die Kupplungsvorrichtung 1 kann aus Kunststoff beispielsweise in einem Spritzgussverfahren hergestellt werden.

Die Kupplungsvorrichtung 1 weist eine umlaufende Außenfläche 3 auf, welche gemäß einer Ausführungsform zylinderförmig ausgebildet ist. Die zylindrische Form kann einfach hergestellt werden und ein weiterer Vorteil diese Form ist die leichte Reinigung im Falle einer Verschmutzung der Kupplungsvorrichtung 1 durch Lebensmitteln. Die umlaufende Außenfläche 3 weist eine Vielzahl von Aufnahmebereiche 4 auf welche gemäß dieser beispielhaften Ausführungsform symmetrisch angeordnet sind. Es ist vorstellbar, dass die Kupplungsvorrichtung nur zwei Aufnahmebereiche 4 aufweist, die gespiegelt auf der umlaufenden Außenfläche angeordnet und/oder ausgebildet sind. Vorteilhafterweise werden alle Aufnahmebereiche in einem Produktionsschritt während des Herstellungsverfahrens hergestellt.

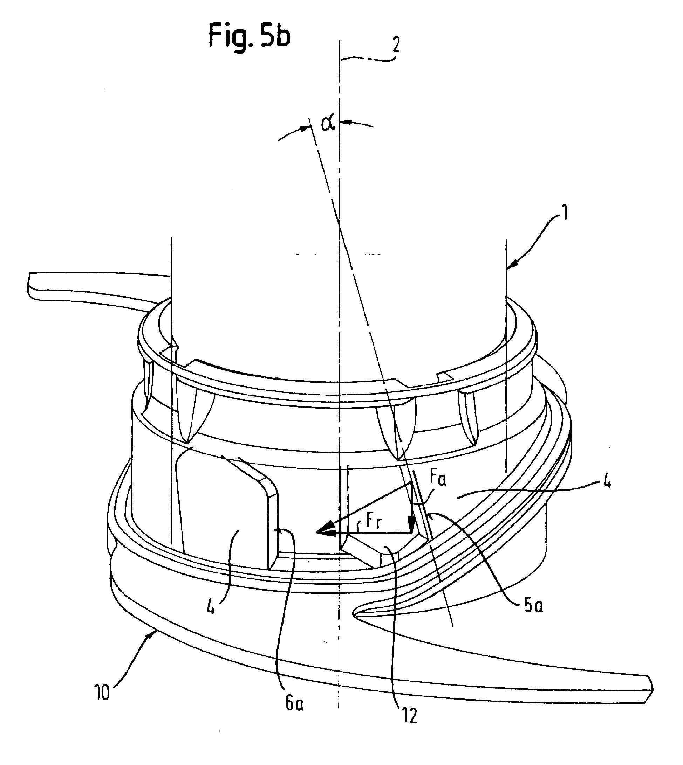

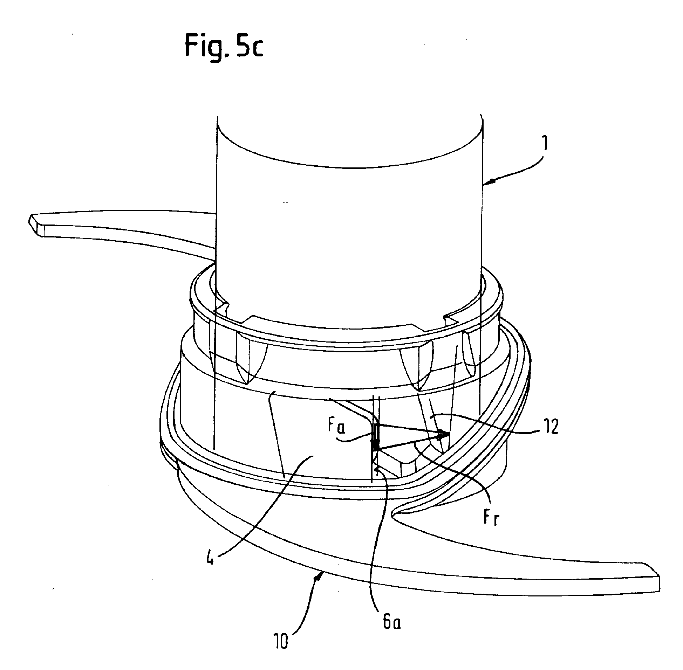

Die Aufnahmebereiche 4 weisen einen ersten Eingriffsbereich 5 und einen zweiten Eingriffsbereich 6 auf. Der erste Eingriffsbereich 5 wirkt im Falle des Normalbetriebs des Küchengeräts 13. Normalbetrieb bedeutet, dass das Werkzeug 10 in der Rotationsrichtung 7 betriebsgemäß das Mischgut bzw. Lebensmittel verarbeitet. Der zweite Eingriffsbereich 6 wirkt beispielsweise im Falle eines Rückschlags bewirkt durch Drehzahländerungen durch den Benutzer des Geräts 13 oder durch plötzliches Anhalten des Elektromotors. Das Stoppen des Motors und die Trägheit des Mischguts können bewirken, dass das Werkzeug 10 weiter dreht, obwohl die Rotation der Antriebswelle des Motors und somit die Rotation um die Rotationsachse 2 der Kupplungsvorrichtung 1 bereits gestoppt hat. Dies kann dazuführen, dass das Werkzeug aus der Kupplungsvorrichtung 1 gelöst wird bzw. nach oben wandert. In diesem Fall wirkt der zweite Eingriffsbereich 6, so dass eine Kraftkomponente entsteht, welche das Werkzeug 10 in der Kupplungsvorrichtung festhält bzw. fixiert. Auf die Entstehung der jeweiligen Kraftkomponenten wird auf die Fig. 5b und 5c verwiesen, welche beide Rotationsrichtungen der Kupplungsvorrichtung 1 schematisch aufzeigen.

Der erste Eingriffsbereich 5 eines Aufnahmebereichs 4 weist eine Antriebskante 5a auf, welche im Normalbetrieb des Küchengeräts 13 belastet wird ist, d.h. die Antriebskante wirkt mit dem Mitnehmer 12 am Werkzeug 10 zusammen. Die Rückschlagskante 6a an dem zweiten Eingriffsbereich 6 wirkt im Falle eines Rückschlags auf das Schneidemesser bzw. Werkzeug 10. Folglich hält die Kupplungsvorrichtung 1 das Werkzeug 10 spielfrei entlang der Rotationsachse 2 fest, so dass kein Herausgleiten oder Herauslösen aus der Kupplung 1 vorkommen kann.

Die Antriebskante 5a und die Rückschlagkante 6a weisen jeweils eine entlang der Kante verlaufende Fase auf, welche mit dem Werkzeug 10 im Kontaktbereich zusammenwirkt, so dass die Fixierung in der Kupplungsvorrichtung noch zuverlässiger ist. Die Fase bewirkt einen Presssitz im Kontaktbereich.

Die Aufnahmebereiche 4 sind dergestalt angeordnet, dass ein dritter Aufnahmebereich 11 dazwischen ausgebildet ist. Dieser dritte Bereich 11 wirkt wie ein Justierbereich, da das Werkzeug in seine Endlage in der Kupplungsvorrichtung 1 geführt wird. Die zwei Kanten nämlich die Antriebskante 5a und die Rückschlagskante 6a verlaufen antiparallel zueinander, und die Antriebskante 5a weist einen Winkel von ca. 20° mit der Rotationsachse 2 auf. Durch die geneigte Ausbildung der Antriebskante 5a kann der Eingriffsbereich im Kontaktbereich zwischen Werkzeug 10 und Kupplungsvorrichtung vergrößert werden, um somit die Übertragung des Drehmoments auf das Werkzeug zu verbessern. Ferner in den folgenden Figuren wird beispielhaft gezeigt wie die geneigte Kante 5a die Kräfteverteilung im Kontaktbereich beeinflusst. Ähnliches gilt für die Rückschlagskante 6a.

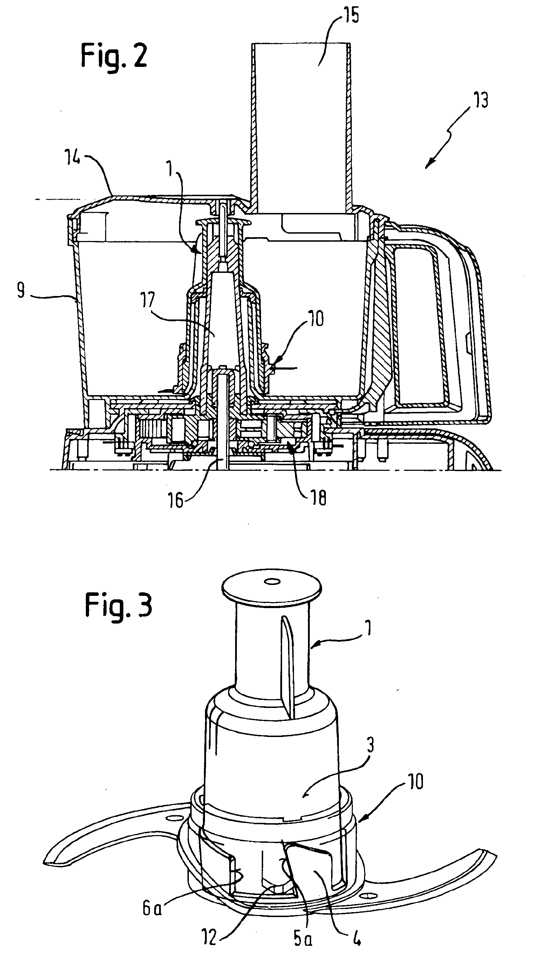

Fig. 2 zeigt ein Küchengerät mit einer Kupplungsvorrichtung 1 gemäß der vorliegenden Erfindung. Das Küchengerät 13 weist ein Behälter 9 auf, in welchem die Lebensmittel verarbeitet werden. Der Behälter 9 wird mit Hilfe eines Deckels 14 abgedeckt, in welchem eine Einfüllöffnung 15 ausgebildet ist. Hierdurch können Lebensmittel nachgefüllt werden, ohne dass das der Antriebsmotor (nicht dargestellt) angehalten werden muss. Das Küchengerät 13 weist ferner einige Sicherheitsschalter auf, welche einen sicheren Betrieb erlauben. So kann beispielsweise der Motor angehalten werden, wenn der Deckel bei drehendem Motor abgenommen werden sollte.

Der Elektromotor befindet sich unterhalb des Behälters 9 und weist eine Antriebswelle 16 auf. Die Welle 16 kann zum Antreiben eines Planetengetriebes 18 eingesetzt werden, welches wiederum eine Zwischennabe 17 antreibt. Somit kann die hohe Drehzahl des Elektromotors mit Hilfe des Planetengetriebes 18 in eine niedrigere Drehzahl zum Betreiben des Werkzeugs 10 umgewandelt werden. Auf der Zwischennabe 17 wird die Kupplungsvorrichtung 1 aufgesetzt, und beispielsweise mit einer Innenverzahnung an der Zwischennabe 17 drehfest gelagert. Das Werkzeug 10 wird erfindungsgemäß mittels der Kupplungsvorrichtung 1 angetrieben.

Die Aufnahmebereiche 4 auf der Außenfläche der Kupplungsvorrichtung 1 bewirken, dass das Werkzeug 10, in diesem Fall ein Schneidemesser, immer in einem im Wesentlichen konstanten Abstand zum Boden des Behälters 9 gehalten wird. Im Falle eines Rückschlags auf das Werkzeug bewirkt die Rückschlagskante 6a an der Kupplungsvorrichtung, dass das Werkzeug 10 nicht nach oben in Richtung Deckel 14 entlang der Kupplungsvorrichtung 1 hinaufwandert oder hinaufspringt. Das heißt, dass das Herauslösen des Werkzeugs 10 unterbunden wird.

Zur Stabilisierung wird die Kupplungsvorrichtung 1 zusätzlich im Gerätedeckel 14 drehbar gelagert, so dass keine Kippmomente entstehen können.

Fig. 3 zeigt die Kupplungsvorrichtung 1 gemäß der vorliegenden Erfindung mit augesetztem Schneidemesser 10 in einer schematischen Ansicht. Das Werkzeug 10 weist einen Mitnehmer 12 auf, welcher jeweils die Antriebskante 5a oder im Falle eines Rückschlags die Rückschlagskante 6a kontaktiert. Der Mitnehmer 12 und der Aufnahmebereich 4 der Kupplungsvorrichtung 1 erzeugen eine axiale Kraftkomponente, welche das Werkzeug 10 spielfrei in der Kupplung 1 festhält. Die Kräfteverteilung wird in den Fig. 5b und 5c näher erläutert.

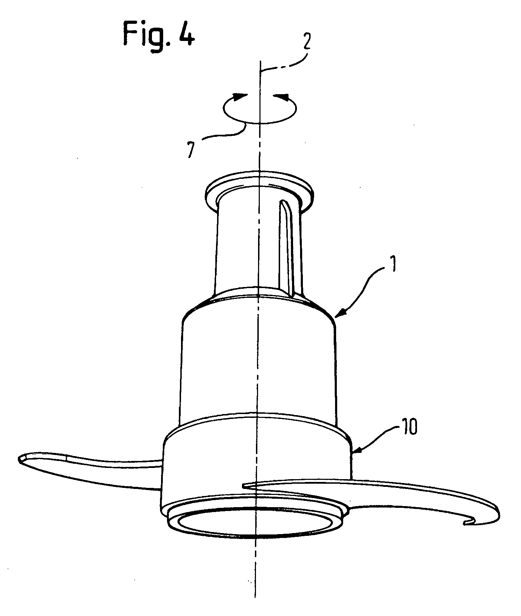

Fig. 4 zeigt eine weitere Ansicht auf die Kupplungsvorrichtung 1 mit montiertem Werkzeug 10 auf. Das Schneidemesser 10 kann genauso wie die Kupplungsvorrichtung 1 aus Kunststoff bestehen, jedoch sind Ausführungen aus metallischem Material ebenfalls vorstellbar. Auch vorstellbar ist die Kupplungsvorrichtung aus Kunststoff und Metall herzustellen. Das Schneidemesser 10 weist einen hohlzylindrischen Korpus an welchem die Schneidaufsätze ausgebildet sind. Der Korpus wird von oben auf die Kupplungsvorrichtung aufgesetzt und automatisch mittels des Justierbereichs 11 in seine Endlage bzw. Arbeitslage zentriert. Durch die Aufnahmebereiche 4 entsteht eine drehfeste und spielfreie Verbindung zwischen Werkzeug 10 und Kupplungsvorrichtung 1. Damit das Werkzeug 10 leicht wieder abmontiert werden kann, werden die Aufnahmebereiche so implementiert, dass das Werkzeug 10 in der Ebene senkrecht zur Rotationsachse 2 ein vorbestimmtes Spiel aufweist. Die erlaubt zusätzlich auch im Falle eines klebrigen Mischgutes wie Teig, dass das Werkzeug 10 leicht aufgesetzt bzw. abmontiert werden kann.

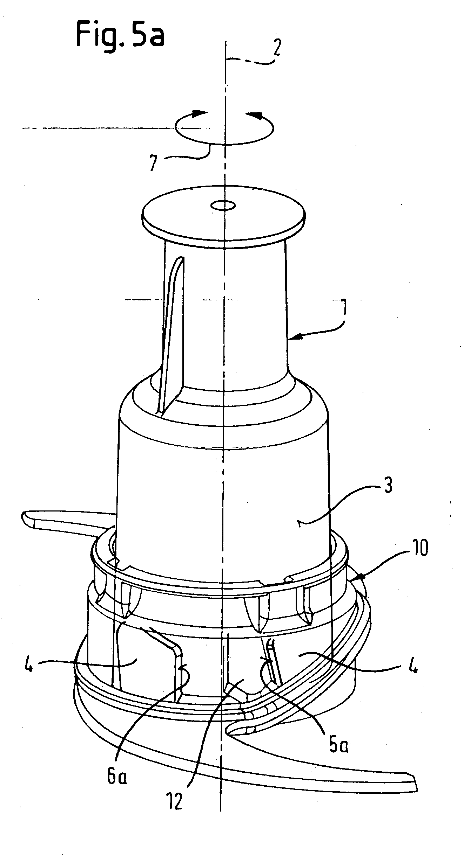

Fig. 5a zeigt eine schematische Ansicht der Kupplungsvorrichtung 1 in der Normalbetriebsposition. Das heißt, dass die Antriebskante 5a am Aufnahmebereich 4 den Mitnehmer 12 am Werkzeug 10 antreibt. Die Rückschlagskante 6a ist in diesem Fall unbelastet, da kein Kontakt zwischen Rückschlagskante 6a und Mitnehmer 12 entsteht.

Fig. 5b zeigt den Kontaktbereich zwischen Werkzeug 10 und Kupplungsvorrichtung 1 in Detail. In diesem Fall dreht die Kupplungsvorrichtung vorwärts, so dass die Antriebskante 5a des Aufnahmebereichs 5 aktiv ist, d.h. den Mitnehmer 12 des Werkzeugs 10 antreibt. Die Antriebskante 5a weist einen Winkel α zur Rotationsachse 2 auf. Durch die geneigte Ausbildung der Antriebskante 5a entsteht im Kontaktbereich zum Mitnehmer 12 eine Abwärtskraft Fₐ, welche das Werkzeug 10 in einem konstantem abstand zum Boden des Behälters 9 spielfrei entlang der Rotationsachse 2 hält. Die zweite Kraftkomponente Fᵣ wirkt in Drehrichtung und treibt somit das Werkzeug 10 an. In dieser Betriebsform bleibt die Rückschlagskante 6a des Aufnahmebereichs 4 unbelastet, da kein Kontakt zum Mitnehmer 12 am Werkzeug 10 entstanden ist.

Fig. 5c hingegen zeigt die Kräfteverteilung im Falle eines Rückschlags oder einer Änderung der Rotationsrichtung 7. Die Rückschlagskante 6a ist im Wesentlichen parallel zur Rotationsachse 2 ausgebildet und bildet mit dem Mitnehmer 12 des Werkzeugs 10 eine Kontaktbereich. In dem Kontaktbereich entsteht ähnlich wie in der Antriebsrichtung eine Kräfteverteilung in axialer Richtung Fₐ und in horizontaler Richtung Fᵣ . Die axiale Kraftkomponente sorgt dafür, dass das Werkzeug im Rückschlagsfall nicht auf der Kupplungsvorrichtung 1 nach oben wandern oder herausspringen kann. Die axiale Kraftkomponente ist durch die parallele Ausbildung der Rückschlagskante 6a nicht so stark wie im Vorwärtsbetrieb, jedoch stark genug, dass das Werkzeug 10 stabil und spielfrei gelagert ist. Es ist vorstellbar die Rückschlagskante 6a ebenfalls geneigt zur Rotationsachse auszubilden um die axiale Kraft zu verstärken. Auch denkbar ist weitere Sicherungsmittel auf der Kante 6a vorzusehen, welche beispielsweise mit einem geeigneten Mittel am Mitnehmer 12 am Werkzeug 10 zusammenwirkt. So könnte beispielsweise die Rückschlagskante eine oder mehrere Einbuchtungen aufweisen, welche mit Gegenmitteln am Mitnehmer 12 in deren Dimension übereinstimmen, so dass das Werkzeug 10 nicht nach oben aus der Lagerung wandern kann.

Die Kupplungsvorrichtung kann bevorzugt in einem Küchengerät eingesetzt werden, jedoch es ist denkbar, dass diese ebenfalls für einen Stabmixer, Zerkleinerer oder desgleichen eingesetzt werden kann.

### Bezugszeichenliste

- 1: Kupplungsvorrichtung
- 2: Rotationsachse
- 3: umlaufende Außenfläche
- 4: Aufnahmebereich
- 5: erster Eingriffsbereich
- 5a: Antriebskante
- 6: zweiter Eingriffsbereich
- 6a: Rückschlagskante
- 7: Rotationsrichtung
- 8: Richtung der spielfreien Aufnahme des Werkzeugs
- 9: Behälter
- 10: Werkzeug
- 11: dritter Bereich bzw. Justierbereich
- 12: Mitnehmer am Werkzeug
- 13: Küchengerät
- 14: Deckel
- 15: Einfüllöffnung
- 16: Antriebswelle
- 17: Zwischennabe
- 18: Planetengetriebe

## Patentansprüche

1. Kupplungsvorrichtung (1) für ein Küchengerät (13) zum Ankuppeln an eine Antriebseinrichtung des Küchengeräts (13), um ein Werkzeug (10) rotierend um eine Rotationsachse (2) anzutreiben, wobei die Kupplungsvorrichtung (1) eine umlaufende Außenfläche (3) mit mindestens einem Aufnahmebereich (4) zum Aufnehmen des Werkzeugs (10) aufweist, **dadurch gekennzeichnet, dass** der mindestens eine Aufnahmebereich (4) einen ersten Eingriffsbereich (5) und einen zweiten Eingriffsbereich (6) aufweist, so dass das Werkzeug (10) unabhängig von der Rotationsrichtung (7) im Wesentlichen spielfrei entlang der Rotationsachse (2) aufnehmbar ist, **dadurch gekennzeichnet, dass** der erste Eingriffsbereich (5) eine Antriebskante (5a) und der zweite Eingriffsbereich (6) eine Rückschlagskante (6a) aufweisen, wobei die Antriebskante (5a) und die Rückschlagskante (6a) antiparallel verlaufen.

2. Kupplungsvorrichtung (1) nach Anspruch 1, **dadurch gekennzeichnet, dass** die Antriebskante (5a) unter einem Winkel (α) zur Richtung (8) der Rotationsachse (2) ausgebildet ist, wobei der Winkel (α) zwischen 10° und 20°, insbesondere 20° zur Richtung (8) geneigt ist.

3. Kupplungsvorrichtung (1) nach Anspruch 1, **dadurch gekennzeichnet, dass** die Rückschlagskante (6a) im Wesentlichen parallel zu Richtung (8) ausgebildet ist.

4. Kupplungsvorrichtung (1) nach einem der vorhergehenden Ansprüche, wobei die Antriebskante (5a) und die Rückschlagskante (6a) jeweils eine entlang der Kante verlaufende abgeschrägte Fase aufweisen, welche derart eingerichtet ist das Werkzeug (10) in der Kupplungsvorrichtung (1) zu fixieren.

5. Kupplungsvorrichtung (1) nach einem der vorhergehenden Ansprüche, wobei der Aufnahmebereich (4) ferner einen dritten Bereich (11) aufweist, welcher zweischen dem ersten Eingriffsbereich (5) und dem zweiten Eingriffsbereich (6) ausgebildet ist, und eingerichtet ist das Werkzeug (10) während eines Montagevorgangs des Werkzeugs (10) auf die Kupplungsvorrichtung (1) in eine Endlage zu justieren.

6. Kupplungsvorrichtung (1) nach Anspruch 1, wobei die Rotationsachse (2) sich im Wesentlichen vertikal erstreckt.

7. Kupplungsvorrichtung (1) nach einem der vorhergehenden Ansprüche, wobei die Aufnahmebereiche (4) symmetrisch auf der umlaufenden Außenfläche (3) ausgebildet sind, und rippenartig aus der umlaufenden Außenfläche (3) herausragen.

8. Kupplungsvorrichtung (1) nach einem der vorhergehenden Ansprüche, wobei die Kupplungsvorrichtung (1) in einem Spritzgussverfahren herstellbar ist, und insbesondere aus Kunststoff.

9. Küchengerät (13), umfassend eine Antriebseinrichtung und eine Kupplungsvorrichtung (1) nach einem der Ansprüche 1 bis 10, wobei die Kupplungsvorrichtung (1) im Betrieb ein Arbeitswerkzeug (10) des Küchengeräts (13) antreibt, und wobei das Arbeitswerkzeug dergestalt ausgebildet ist, um von der Kupplungsvorrichtung (1) angetrieben zu werden.

## Claims

1. Coupling device (1) for a kitchen appliance (13) for coupling to a drive unit of the kitchen appliance (13) in order to drive a tool (10) in a rotary manner around a rotation axis (2), wherein the coupling device (1) has a circumferential outer surface (3) comprising at least one receiving region (4) for receiving the tool (10), **characterised in that** the at least one receiving region (4) has a first engagement region (5) and a second engagement region (6) such that the tool (10) can be received along the rotation axis (2) in a manner substantially free of play and irrespective of the direction of rotation (7), **characterised in that** the first engagement region (5) has a drive edge (5a) and the second engagement region (6) has a kickback edge (6a), wherein the drive edge (5a) and the kickback edge (6a) run antiparallel to each other.

2. Coupling device (1) according to claim 1, **characterised in that** the drive edge (5a) is embodied at an angle (α) to the direction (8) of the rotation axis (2), with the angle (α) being inclined by between 10° and 20°, in particular 20°, to the direction (8).

3. Coupling device (1) according to claim 1, **characterised in that** the kickback edge (6a) is embodied as substantially parallel to direction (8).

4. Coupling device (1) according to one of the preceding claims, wherein the drive edge (5a) and the kickback edge (6a) in each case have a chamfered bevel running along the edge and configured in such a way as to fix the tool (10) in the coupling device (1).

5. Coupling device (1) according to one of the preceding claims, wherein the receiving region (4) additionally has a third region (11) which is embodied between the first engagement region (5) and the second engagement region (6) and is configured to adjust the tool (10) into a final position during an operation to mount the tool (10) onto the coupling device (1).

6. Coupling device (1) according to claim 1, wherein the rotation axis (2) extends substantially vertically.

7. Coupling device (1) according to one of the preceding claims, wherein the receiving regions (4) are formed symmetrically on the circumferential outer surface (3) and project in the manner of ribs from the circumferential outer surface (3).

8. Coupling device (1) according to one of the preceding claims, wherein the coupling device (1) can be produced in an injection moulding process, and in particular can be made of plastic.

9. Kitchen appliance (13) comprising a drive unit and a coupling device (1) according to one of claims 1 to 8, wherein during operation the coupling device (1) drives a working tool (10) of the kitchen appliance (13) and wherein the working tool is embodied in such a way as to be driven by the coupling device (1).

## Revendications

1. Dispositif d'accouplement (1) pour un appareil de cuisine (13) destiné à l'accouplement à un dispositif d'entraînement de l'appareil de cuisine (13), afin d'entraîner un ustensile (10) de manière rotative autour d'un axe de rotation (2), le dispositif d'accouplement (1) présentant une surface extérieure périphérique (3) ayant au moins une zone de logement (4) pour loger l'ustensile (10), **caractérisé en ce que** l'au moins une zone de logement (4) présente une première zone de prise (5) et une deuxième zone de prise (6), de sorte que l'ustensile (10) soit logeable essentiellement sans jeu le long de l'axe de rotation (2), indépendamment du sens de rotation (7), **caractérisé en ce que** la première zone de prise (5) présente un bord d'entraînement (5a) et **en ce que** la deuxième zone de prise (6) présente un bord de retenue (6a), le bord d'entraînement (5a) et le bord de retenue (6a) s'étendant de manière antiparallèle.

2. Dispositif d'accouplement (1) selon la revendication 1, **caractérisé en ce que** le bord d'entraînement (5a) est réalisé dans un angle (α) par rapport au sens (8) de l'axe de rotation (2), l'angle (α) étant incliné entre 10° et 20°, notamment de 20° par rapport au sens (8).

3. Dispositif d'accouplement (1) selon la revendication 1, **caractérisé en ce que** le bord de retenue (6a) est réalisé de manière essentiellement parallèle au sens (8).

4. Dispositif d'accouplement (1) selon l'une quelconque des revendications précédentes, le bord d'entraînement (5a) et le bord de retenue (6a) présentant respectivement un chanfrein en biais s'étendant le long du bord, lequel chanfrein est aménagé pour fixer l'ustensile (10) dans le dispositif d'accouplement (1).

5. Dispositif d'accouplement (1) selon l'une quelconque des revendications précédentes, la zone de logement (4) présentant en outre une troisième zone (11), laquelle est réalisée entre la première zone de prise (5) et la deuxième zone de prise (6), et étant aménagée pour ajuster l'ustensile (10) dans une position finale pendant une opération de montage de l'ustensile (10) sur le dispositif d'accouplement (1).

6. Dispositif d'accouplement (1) selon la revendication 1, l'axe de rotation (2) s'étendant essentiellement verticalement.

7. Dispositif d'accouplement (1) selon l'une quelconque des revendications précédentes, les zones de logement (4) étant réalisées symétriquement sur la surface extérieure périphérique (3) et dépassant en forme de nervures hors de la surface extérieure périphérique (3).

8. Dispositif d'accouplement (1) selon l'une quelconque des revendications précédentes, le dispositif d'accouplement (1) pouvant être fabriqué par un procédé de moulage par injection, et notamment en matière plastique.

9. Appareil de cuisine (13) comprenant un dispositif d'entraînement et un dispositif d'accouplement (1) selon l'une quelconque des revendications 1 à 10, le dispositif d'accouplement (1), pendant le fonctionnement, entraînant un ustensile de travail (10) de l'appareil de cuisine (13), et l'ustensile de travail étant réalisé de manière à être entraîné par le dispositif d'accouplement (1).
